(19) Europäisches Patentamt / European Patent Office / Office européen des brevets

(11) **EP 2 467 993 B1**

(12) # EUROPÄISCHE PATENTSCHRIFT

(45) Veröffentlichungstag und Bekanntmachung des Hinweises auf die Patenterteilung:
**18.04.2018 Patentblatt 2018/16**

(21) Anmeldenummer: **10749627.5**

(22) Anmeldetag: **19.08.2010**

(51) Int Cl.:
*H04L 29/08* *(2006.01)*   *H04L 29/06* *(2006.01)*

(86) Internationale Anmeldenummer:
**PCT/EP2010/062085**

(87) Internationale Veröffentlichungsnummer:
**WO 2011/020870 (24.02.2011 Gazette 2011/08)**

(54) **VERFAHREN UND ANORDNUNG ZUR SYNCHRONISATION VON DATENSTRÖMEN IN NETZWERKEN SOWIE EIN ENTSPRECHENDES COMPUTERPROGRAMM UND EIN ENTSPRECHENDES COMPUTERLESBARES SPEICHERMEDIUM**

METHOD AND ARRANGEMENT FOR SYNCHRONISING DATA STREAMS IN NETWORKS AND A CORRESPONDING COMPUTER PROGRAM AND CORRESPONDING COMPUTER-READABLE STORAGE MEDIUM

PROCÉDÉ ET AGENCEMENT POUR SYNCHRONISER DES FLUX DE DONNÉES DANS DES RÉSEAUX, AINSI QU'UN PROGRAMME INFORMATIQUE CORRESPONDANT ET UN SUPPORT DE STOCKAGE CORRESPONDANT POUVANT ÊTRE LU PAR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **19.08.2009 DE 102009028645**

(43) Veröffentlichungstag der Anmeldung:
**27.06.2012 Patentblatt 2012/26**

(73) Patentinhaber: **Lautsprecher Teufel GmbH**
**10787 Berlin (DE)**

(72) Erfinder: **HIRSCH, Michael**
**10967 Berlin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**EP-A1- 1 398 931     US-A- 5 220 676**
**US-A1- 2008 112 440**

- **JEONG-SEOK KANG ET AL: "RBCC : reservation-based concurrency control for distributed UPnP devices", 2008 INTERNATIONAL CONFERENCE ON CONTROL, AUTOMATION AND SYSTEMS (ICCAS) IEEE PISCATAWAY, NJ, USA, 14. Oktober 2008 (2008-10-14), - 17. Oktober 2008 (2008-10-17), Seiten 880-883, XP002613539, ISBN: 978-89-950038-9-3**

**Beschreibung**

Die Erfindung betrifft ein Verfahren und eine Anordnung zur Synchronisation von Datenströmen in Netzwerken sowie ein entsprechendes Computerprogramm und ein entsprechendes computerlesbares Speichermedium, welche insbesondere einsetzbar sind zur Synchronisation verschiedener Audio-Abspielgeräte (Audio-Adapter) innerhalb eines Heimnetzwerkes. Dabei kann es sich bei dem Heimnetzwerk um ein handelsübliches Computernetzwerk handeln, welches sowohl drahtgebundene als auch drahtlose Komponenten beinhaltet.

Es gibt in zunehmender Anzahl Geräte auf dem Markt, die o.g. Standards entsprechen. Die Unterstützung dieser Standards sind jedoch nicht hinreichend um wesentliche Leistungsmerkmale eines "Multi Room Audio Systems" zu realisieren. Diese Leistungsmerkmale sind:

- Synchrones Abspielen gleicher Audiodaten oder unterschiedlicher Kanäle einer gleichen Audioquelle von verschiedenen Audio Adaptern.

- Synchrones Einstarten eines weiteren Audio Adapters während der Wiedergabe.

Ein trivialer Lösungsansatz wäre, ein möglichst zeitnahes, ferngesteuertes Starten der autarken Abspielstationen mittels einer Fernsteuerungssignals. Dieses Vorgehen führt jedoch zu einem Signalversatz in einer Größenordnung von 200-500 msec. Dies wäre nicht praxisgerecht und der entsprechende Lösungsansatz ist daher für die Realisierung eines Multi Room Audio Systems nicht geeignet.

Die hohe Latenz basiert auf den unterschiedlich großen Prebuffers der Audioadapter, welche abhängig vom verwendeten Audioformat nach dem Auslösen der Abspielfunktion gefüllt werden bevor der Abspielvorgang beginnt.

Hinzu kommt, dass TCP/IP ein paketorientierter Standard ist, bei dem sich grundsätzlich keine Aussagen über Laufzeiten zwischen Absenden einer Information und deren Verarbeitung treffen lassen.

Neben dem beschriebenen Latenzproblem existiert das Problem unsynchronisierter Phasen. Die Abspielgeschwindigkeit jedes Audioadapters richtet sich in der Regel nach dem Quarz des jeweiligen Wandlerchips. Die Toleranzen jedes individuellen Quarzes, führen dazu, dass die Phasen der Audioadapter im Zeitverlauf zunehmend voneinander abweichen (Drift). Beide Phänomene addieren sich zu einer Signalverschiebung und führen beim aktuellen Stand der Technik zu unsynchronem Abspielen.

Bestehende Multi Room Audio Systeme, die diese Leistungsmerkmale synchrones Abspielen bzw. synchrones Einstarten realisieren, basieren auf proprietären Protokollen.

Als Alternative zu TCP existiert der Übertragungsstandard RTP (= Real-Time Transport Protocol) zur synchronisierten Wiedergabe von Mediadaten (Video + Audio). Der Verwendung von RTP zur Realisation eines Multi Room Audio Systems stehen jedoch folgende Nachteile entgegen:

- Die Auflösung der Synchronisationsinformation ist für Audiodaten zu gering
- RTP basiert auf UDP. Im Internet und auch im LAN haben jedoch http basierend auf tcp eine deutlich größere Verbreitung und sind als de-facto Standard anzusehen.
- UDP ist ein "verbindungsloser" Übertragungsstandard, der im Gegensatz zu tcp keine Übertragung garantiert. D.h. Datenpakete können während der Übertragung verloren gehen. Dies nimmt man vor dem Hintergrund in Kauf, dass das Hauptanwendungsgebiet von RTP Video und nicht HiFi - Audio ist. Im Falle von Video kommt in einem solchen Fall ("Paket Loss") zu einem Frame drop, der im Zweifel unbemerkt bleibt. Im Falle von Audio kommt es aber zu einem deutlich hörbaren Aussetzer. UDP Paket Loss ist insbesondere ein Problem in IEEE 802.11 Drahtlosnetzwerken.

In Computernetzwerken werden zwar teilweise Zeit- oder Taktinformationen bereitgestellt, wobei diese jedoch insbesondere in der Sicherungsschicht des OSI-Schichtenmodells (OSI = Open Systems Interconnection) übertragen werden. Daher sind diese Informationen hardwareabhängig und für die Zwecke der Synchronisation von Audio-Abspielgeräten innerhalb eines Heimnetzwerkes nicht geeignet. Außerdem finden heterogene Netzwerke, bestehend aus unterschiedlichen Übertragungstechnologien (wie z.B. Ethernet, Wifi, Bluetooth, Powerline..) gerade im Heimbereich immer mehr Verwendung, so dass eine Nutzung dieser technologieabhängigen Informationen einer Einschränkung der Anwendbarkeit der Erfindung darstellt.

Auf dem Gebiet der Erfindung ist weiter aus der Veröffentlichung US 2008/0112440 A1 ein Verfahren zum Synchronisieren der Übertragung von mehreren Transmittern bekannt. Dabei werden Daten von einer Quelle zu Basisstationen eines drahtlosen Netzwerks gesendet, welche die Daten in einer Zelle abstrahlen. Gemäß US 2008/0112440 A1 wird vorgeschlagen, die Daten gleichzeitig von den Basisstationen abzustrahlen, um Störungen beim Roaming zu vermeiden. Dabei wird die Laufzeit der Daten von der Quelle zu den Basisstationen berücksichtigt und der Zeitpunkt des Abstrahlens auf eine globale Uhr bezogen.

In der Druckschrift EP 1 398 931 A1 wird ein Verfahren zum synchronen Abspielen von Datenpaketen vorgeschlagen. Um ein solches synchrones Abspielen zu erreichen, wird in den Abspieleinheiten eine gemeinsame Zeitinformation direkt von einer globalen Uhr abgegriffen.

Ein Verfahren für ein Resynchronisieren von entfernten Stationen, bei dem eine entfernte Station sich nach einem Verlust der Synchronizität mit den anderen entfernten Stationen wieder synchronisiert, wird in der Patentschrift US 5,220,676 A beschrieben.

Ein anderes Synchronisationsverfahren für eine UPnP-Architektur (UPnP = Universal Plug and Play) wird in der Veröffentlichung Kang Jeong-Seok et al.: RBCC: Reservation-Based Concurrency Control for Distributed UPnP Devices, International Conference on Control, Automation and Systems (ICCAS) 2008, 14. - 17. Oktober 2008 in COEX, Seoul, Korea, S. 880-883 beschrieben. Dabei wird eine beste Meisteruhr festgelegt und die lokalen Uhren der Komponenten der UPnP-Architektur auf die beste Meisteruhr synchronisiert durch Berücksichtigung der Laufzeit von Nachrichten zwischen den Komponenten der UPnP-Architektur sowie der Zeitdifferenz zwischen den lokalen Uhren und der besten Meisteruhr.

Es ist daher Aufgabe der vorliegenden Erfindung, ein Verfahren und eine Anordnung zur Synchronisation von Datenströmen in Netzwerken sowie ein entsprechendes Computerprogramm und ein entsprechendes computerlesbares Speichermedium bereitzustellen, welche die genannten Nachteile vermeiden und es insbesondere gestatten, auch Datenströme synchron abzuspielen, welche keine Zeitinformationen umfassen.

Diese Aufgabe wird erfindungsgemäß durch die Merkmale in den Ansprüchen 1, 13 und 18 bis 20 gelöst. Zweckmäßige Ausgestaltungen der Erfindung sind in den Unteransprüchen enthalten.

Ein besonderer Vorteil des erfindungsgemäßen Synchronisationsverfahrens besteht darin, dass ein Auseinanderdriften bei der Wiedergabe mindestens eines Datenstroms, beispielsweise eines Audio-Datenstroms, vermieden wird, wenn die Wiedergabe durch mehrere Audio-Wiedergabegeräte, wie beispielsweise WLAN-Lautsprecher, erfolgt. Ein weiterer Vorteil des erfindungsgemäßen Verfahrens besteht darin, dass Synchronisationsfehler vermieden werden, welche beispielsweise durch zufällige Netzwerkeigenschaften wie das so genannte Netzwerkjitter verursacht werden. Dies wird dadurch erreicht, indem bei dem erfindungsgemäßen Verfahren zum Synchronisieren der Datenausgabe in Netzwerken die Synchronisation auf Basis einer gemeinsamen ersten Zeitinformation erfolgt, welche durch zumindest einen Teil der in dem Netzwerk befindlichen Ausgabeeinheiten ausgewertet wird. Bei der gemeinsamen ersten Zeitinformation kann es sich beispielsweise um eine absolute Zeitangabe, um ein Taktsignal, welches in den Komponenten des Netzwerks zur Ermittlung der globalen Zeit aufsummiert wird, oder um eine relative Zeitangabe, die sich auf einen vorgebbaren globalen Bezugs- oder Startpunkt bezieht, handeln. Die Erfindung ist anwendbar auf mindestens einen Datenstrom, welcher durch mindestens zwei verschiedene Ausgabeeinheiten ausgegeben wird. Bei den mindestens einen Datenstrom kann es sich um einen Datenstrom bzw. Datenströme handeln, dessen/deren Ausgabe durch die mindestens zwei verschiedenen Ausgabeeinheiten in einer zeitlichen Relation steht bzw. bei dessen/deren Ausgabe Zeit und/oder Geschwindigkeit, mit der die Ausgabe durch die mindestens zwei verschiedenen Ausgabeeinheiten erfolgt, miteinander in Beziehung stehen oder voneinander abhängen. Die Ausgabe des mindestens einen Datenstroms durch die mindestens zwei verschiedenen Ausgabeeinheiten wird daher zumindest hinsichtlich Phase und/oder Frequenz synchronisiert. Bei dem Datenstrom kann es sich beispielsweise um einen einzigen Datenstrom handeln, welcher von einer Datenquelle an die mindestens zwei Ausgabeeinheiten übertragen wird, wie beispielsweise ein MP3-Datenstrom eines Musikstückes, welches in verschiedenen Räumen durch die mindestens zwei Ausgabeeinheiten wiedergegeben werden soll. Es kann sich bei den Datenströmen aber auch um den linken und rechten Kanal einer Stereo-AudioQuelle handeln oder auch allgemein um verschiedene Datenströme, deren Ausgabe in irgendeiner zeitlichen Abhängigkeit zueinander stehen. Erfindungsgemäß wird den mindestens zwei Ausgabeeinheiten bzw. dem Netzwerk eine erste Zeitinformation zur Verfügung gestellt, die einen Bezugstakt bzw. eine Bezugszeit darstellt, auf welche sich Komponenten des Netzwerkes, insbesondere zumindest ein Teil der Abspieleinheiten des Netzwerkes als einen globalen Takt- bzw. Zeitgeber beziehen. Dieser Takt- bzw. Zeitgeber kann auf einer speziellen Datenverarbeitungseinrichtung installiert sein. Der Takt- bzw. Zeitgeber umfasst ein Software-Modul, den so genannten Wallclock-Server, und eine Hardware-Komponente, bei der es sich um einen lokalen Zeitgeber der speziellen Datenverarbeitungseinrichtung handeln kann, auf dem der Wallclock-Server installiert ist. Bei dem lokalen Zeitgeber kann es sich beispielsweise um den in die Datenverarbeitungseinrichtung eingebauten Hardware-Zeitgeber, wie zum Beispiel die Computeruhr, oder auch um einen speziellen anderen Hardware-Zeitgeber handeln, welcher von dem eingebauten Hardware-Zeitgeber verschieden ist. Es wird insbesondere darauf hingewiesen, dass es sich bei dem Takt- oder Zeitgeber nicht um die in Infrastrukturnetzwerken nach dem Standard IEEE 802.11 und dessen Erweiterungen, wie beispielsweise IEEE 802.11a/b/g oder dergleichen, bereitgestellte TSF-Funktion handeln muss.

Erfindungsgemäß ist beispielsweise vorgesehen, dass Daten, welche die erste gemeinsame Zeitinformation umfassen, von Datenverarbeitungseinrichtung, auf dem der Wallclock-Server installiert ist, über die Vermittlungs-, Transport-, Sitzungs-, Darstellungs-, Anwendungsschicht des OSI-Schichtenmodells oder eine Kombination dieser Schichten übertragen werden. Dadurch ist die erfindungsgemäße Synchronisation in beliebigen Netzwerken möglich, wenn es sich nur um IP-Netzwerke handelt. Insbesondere ist die Erfindung auch in heterogenen Netzwerken, d.h. in Netzwerken, welche sowohl drahtlose als auch drahtgebundene Übertragungsstrecken umfassen, oder in ad hoc-Netzwerken einsetzbar. Eine Einschränkung auf spezielle Hardware oder Kommunikationsstandards, wie beispielsweise den Standard IEEE 802.11 und dessen Erweiterungen, wie beispielsweise IEEE 802.11a/b/g oder dergleichen, ist für die vorliegende Erfindung nicht gegeben.

Die von dem Wallclock-Server dem Netzwerk bereitgestellten Zeitinformationen werden nun erfindungsgemäß von den mindestens zwei Ausgabeeinheiten zur Synchronisation der Ausgabe des mindestens einen Datenstroms genutzt. Hierbei erweist es sich als vorteilhaft, wenn die erste, von dem Wallclock Server bereitgestellte Zeitinformation mit mindestens einer zweiten, lokal in den Netzwerkkomponenten, insbesondere in den mindestens zwei Ausgabeeinheiten, genutzten zweiten Zeitinformation verglichen wird. Diese zweite Zeitinformation wird vorzugsweise von den in den Netzwerkkomponenten jeweils eingebauten Hardware-Zeitgebern bereitgestellt. Dieser Vergleich kann insbesondere den Vergleich der Dauer einer Zeiteinheit, beispielsweise eine Taktlänge, der ersten Zeitinformation mit der Dauer einer Zeiteinheit der zweiten Zeitinformation umfassen. Im Idealfall sind diese Dauern (Taktlängen) identisch, was bedeuten würde, dass der Zeitablauf (bzw. Taktfrequenz) im Wallclock Server genau dem Zeitablauf in den einzelnen Netzwerkkomponenten entspräche, wodurch die gleiche Ausgabegeschwindigkeit auf allen Netzwerkkomponenten gewährleistet sein würde. Im Normalfall stimmen diese Dauern jedoch nicht überein, so dass eine Korrektur der für die Ausgabe genutzten zweiten Zeitinformation vorgenommen werden muss.

Eine bevorzugte Ausführungsform des erfindungsgemäßen Verfahrens sieht daher vor, den Zeitraum zwischen dem Eintreffen eines ersten von dem Wallclock Server gesendeten Zeitsignals der gemeinsamen ersten Zeitinformation und einem zweiten von dem Wallclock Server gesendeten Zeitsignal der gemeinsamen ersten Zeitinformation durch ein auf den Netzwerkkomponenten installiertes Software-Modul, dem so genannten Audio Renderer zu messen und diese Zeitspanne in Einheiten des lokalen Takt- bzw. Zeitgebers der Netzwerkkomponente auszudrücken. Das erste und zweite Signal, $tw_1$ und $tw_2$, welches durch den Wallclock Server bereitgestellt wird, gibt die Zeitdauer an, die auf dem Wallclock Server verstrichen ist, während die Differenz ($tc_2 - tc_1$) zwischen der Ankunftszeit der beiden Signale, ausgedrückt durch Werte des lokalen Zeitgebers der Netzwerkkomponente, die auf der lokalen Netzwerkkomponente verstrichene Zeit zwischen der Ankunft der beiden Zeitsignale des Wallclock Servers angibt. Durch Vergleich dieser beiden Zeitspannen kann auf den unterschiedlichen Ablauf der Zeit im Wallclock Server bzw. der lokale Netzwerkkomponente geschlossen und der lokale Zeitablauf auf der Netzwerkkomponente korrigiert und an den Zeitablauf des Wallclock Servers angepasst werden. Bei Verwendung von absoluten Zeitinformationen kann somit zu jedem Zeitpunkt die Zeit des Wallclock Servers auf der Netzwerkkomponente approximiert werden. Vorteilhafte Ausführungen dieser Approximation werden weiter unten im größeren Detail beschrieben.

Aus der Kenntnis des unterschiedlichen Ablaufs der Zeiten auf dem Wallclock Server bzw. den einzelnen lokalen Netzwerkkomponenten kann nun die Ausgabe des mindestens einen Datenstroms durch mindestens zwei Ausgabeeinheiten hinsichtlich des Starts der Ausgabe und/oder der Ausgabegeschwindigkeit synchronisiert werden. Damit die Ausgabe eines Audiostreams auf mehreren Ausgabeeinheiten gleichzeitig gestartet werden kann, wird diesen beteiligten Ausgabeeinheiten ein Wallclock-Zeitpunkt als Startzeitpunkt mitgeteilt. Durch Approximation dieses Startzeitpunkts in den Ausgabeeinheiten erfolgt der Start der Ausgabe des Audiostreams auf allen beteiligten Ausgabeeinheiten wirklich gleichzeitig.

Die Ausgabegeschwindigkeit der Datenströme wird in einer bevorzugten Ausführungsform dadurch synchronisiert, dass ein Ist- und Soll-Wert für die aktuelle Sample-Position (AS) einer Audioausgabeeinheit, z.B. eines A/D-Wandlers, bestimmt wird. Weicht der Ist- vom Soll-Wert der Sample-Position ab, kann diese Abweichung beispielsweise mittels eines Resampling-Algorithmus ausgeglichen werden, etwa indem einzelne Samples hinzugefügt oder weggelassen werden. Wenn eine Ausgabeeinheit über einen Hardware-Zeitgeber verfügt, dessen Taktfrequenz steuerbar ist, kann die Abweichung der Ist- von der Soll-Position auch korrigiert werden, indem die Taktfrequenz des lokalen Hardware-Zeitgebers an die Taktfrequenz des Wallclock Servers angepasst wird.

Eine weitere Ausführungsform der vorliegenden Erfindung sieht vor, dass Ungenauigkeiten bei der Datenübertragung in dem Netzwerk, beispielsweise einer Varianz der Laufzeit von Datenpaketen zwischen Netzwerkkomponenten (Netzwerkjitter), bei der Synchronisation berücksichtigt werden.

Auswirkungen des Netzwerkjitters werden in einer bevorzugten Ausführungsform der Erfindung dadurch berücksichtigt, indem die Laufzeit der Datenpakete zwischen der Datenquelle und der Ausgabeeinheit ermittelt wird, beispielsweise indem von der Ausgabeeinheit ein Datenpaket an den Wallclock Server und von dem Wallclock Server zurück an die Ausgabeeinheit gesendet wird. Durch Auswertung der Sende- und Empfangszeit des Datenpakets auf der Ausgabeeinheit kann die Dauer der Datenübertragung auf dem Hin- und Rückweg zwischen Ausgabeeinheit und Wallclock Server bestimmt und somit auch die Dauer der Datenübertragung von der Datenquelle zu der Ausgabeeinheit bestimmt werden. Die Kenntnis dieser Übertragungsdauer kann zur Kompensation von Auswirkungen des Netzwerkjitters genutzt werden. Als vorteilhaft erweist es sich darüber hinaus, wenn durch Filteralgorithmen Einflussgrößen herausgerechnet werden, welche den Netzwerkjitter beeinflussen.

Eine Anordnung nach der Erfindung weist mindestens einen Chip und/oder Prozessor auf und ist derart eingerichtet, dass ein Verfahren zum Synchronisieren der Datenausgabe in Netzwerken, welche mindestens zwei Ausgabeeinheiten umfassen, ausführbar ist, wobei zumindest den mindestens zwei Ausgabeeinheiten eine gemeinsame erste Zeitinformation zur Verfügung gestellt wird und die Datenströme synchronisiert werden, indem die Ausgabe auf Basis der gemeinsamen ersten Zeitinformation erfolgt.

Ein Computerprogramm zum Synchronisieren der Datenausgabe in Netzwerken, welche mindestens zwei Ausgabeeinheiten umfassen, ermöglicht es einer Datenverarbeitungseinrichtung, nachdem es in den Speicher der Datenverarbeitungseinrichtung geladen worden ist, ein Synchronisationsverfahren durchzuführen, wobei zumindest den mindestens zwei Ausgabeeinheiten eine gemeinsame erste Zeitinformation zur Verfügung gestellt wird und die Datenströme synchronisiert werden, indem die Ausgabe auf Basis der gemeinsamen ersten Zeitinformation erfolgt.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 18 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zum Synchronisieren der Datenausgabe in Netzwerken, welche mindestens zwei Ausgabeeinheiten umfassen, durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Synchronisationsverfahren durchzuführen, wobei zumindest den mindestens zwei Ausgabeeinheiten eine gemeinsame erste Zeitinformation zur Verfügung gestellt wird und die Datenströme synchronisiert werden, indem die Ausgabe auf Basis der gemeinsamen ersten Zeitinformation erfolgt.

Bei der Erfindung kommen somit zwei Softwaremodule zum Einsatz, die auf unterschiedlichen Hardwaregeräten innerhalb des LANs zum Einsatz kommen:

- der Wallclock Server und
- der Audio Renderer

Das Softwaremodul Wallclock Server kann auf einem beliebigen Hardwaregerät gestartet werden. Innerhalb eines Netzwerkes gibt es nur jeweils eine Instanz des Wallclock Servers. Der Audio Renderer ist die Software einer Netzwerkkomponente, wie beispielsweise eines Audio Adapters und kann demnach mehrmals innerhalb des Netzwerkes vorkommen.

Vorzugsweise ist der Audio Renderer auf allen Netzwerkkomponenten installiert, die zur Ausgabe von Datenströmen geeignet sind.

I. Etablieren einer gemeinsamen Clock auf allen Geräten

Um die erste Zeitinformation den übrigen Netzwerkkomponenten zur Verfügung zu stellen, sendet in einer bevorzugten Ausführungsform das Softwaremodul Wallclock Server periodisch mindestens ein Datenpaket zu dem Softwaremodul Audio Renderer. Dieses Datenpaket beinhaltet in einer bevorzugten Ausführungsform:

- eine Zeitinformation *tw* abgeleitet von dem lokalen Zeitgeber der zugrunde liegenden Hardware, auf welcher der Wallclock Server installiert ist (in der Regel die Computeruhr),
- die Definition des Zeitintervalls der Datenpakete,
- eine fortlaufende Paketnummer.

Die empfangenden, auf zumindest einem Teil der Netzwerkkomponenten installierten Softwaremodule *(Clients)* stellen pro Datenpaket den Zeitpunkt des Empfanges *(tc)* auf Basis seines eingebauten Hardwarezeitgebers fest. Die kontinuierliche Abweichung beider Uhren lässt sich ab dem zweiten Datenpaket als Quotient (QF) beschreiben:

$$QF = (tw_n - tw_0) \, / \, (tc_n - tc_0)$$

Auf den Clients kann nun zu jedem Zeitpunkt tci die Zeit des Wallclock Servers twa approximiert werden:

$$twa = tw_0 + QF * (tc_i - tc_0)$$

twa ist jedoch nicht gleich tw, da die Messpunkte $tc_0$ - $tC_n$ durch die unbekannte Dauer der Paketdatenübertragung verfälscht werden (Netzwerkjitter).

Diese Dauer wird approximiert indem die Clients wiederum ein Datenpaket mit ihrer lokalen Zeit zum Wallclock Server senden. Dieses Datenpaket wird vom Wallclock Server zurück zum client gesendet. Durch Vergleich von Empfangs- und Sendezeit ergibt sich die Dauer zweimaliger Übertragung, aus welcher die Dauer der Paketdatenübertragung für eine Übertragungsstrecke herausgerechnet werden kann.

Da der Netzwerkjitter jedoch nicht konstant ist, werden geeignete Filteralgorithmen eingesetzt, um die fehlerhaften Einflussgrößen herauszurechnen. (LMS, Kalmannfilter, Tiefpass).

Genaugenommen muss für die obigen Berechnungen

$$(tw_{i+1} - tw_i) = (tc_{i+1} - tc_i)$$

vorausgesetzt werden, das heißt, dass ein Zeittakt $tw_{i+1}$ - $tw_i$ auf dem Wallclock Server dieselbe Länge haben soll, wie ein Zeittakt $tc_{i+1}$ - $tc_i$ des lokalen Takt- bzw. Zeitgebers auf den einzelnen Netzwerkkomponenten. Das wird durch die meisten Hardware-Standards gewährleistet oder lässt sich anderenfalls leicht durch Einfügen eines Proportionalitätsfaktors erreichen.

II. Messung der Samplerate der Soundkarte (A/D Wandlers) des Audioadapters relativ zur Wallclock

Sobald twa bekannt ist wird die Soundkarte zu einem beliebigen Zeitpunkt ($tw_{start}$) gestartet. Durch kontinuierliche Abfrage der aktuellen Sampleposition (AS) der Soundkarte ergibt sich vereinfacht eine Differenz in Samples (DS) von Ist- zu Soll-Position:

$$DS = (twa - tw_{start}) * Samplingfrequenz - AS$$

III. Kontinuierlicher Ausgleich der Differenz

DS kann nun nach jeder Abfrage mittels eines Resampling-Algorithmus ausgeglichen werden.

Sollte die zugrunde liegende Audiohardware über einen softwaresteuerbaren Quarz verfügen kann man alternativ die Abspielgeschwindigkeit anpassen;

DS beinhaltet sowohl den Phasen- als auch den Frequenzunterschied (Offset und Drift). Um hohe Schwankungen zu vermeiden werden beide Werte getrennt ausgeglichen.

IV. Audiodatenübertragung / Streaming

Um zu erreichen, dass die Ausgabe eines Datenstromes auf verschiedene Ausgabeeinheiten zeitgleich gestartet werden, bekommen alle Audio Renderer, die innerhalb eines Netzwerkes gemeinsam den Datenstrom, beispielsweise einen Audio-Stream, abspielen oder zeitsynchron unterschiedliche Kanäle einer Audioquelle abspielen sollen, die gleiche, in der Zukunft liegende Wallclock Server Zeit als Startzeitpunkt ($tw_{stream}$) für den Audiodatenstrom mitgeteilt.

Der Audio-Render berechnet im laufenden System die Sampleposition (SP) des ersten Samples des Audiodatenstromes durch:

$$SP = (tw_{stream} - tw_{start}) * Samplingfrequenz$$

Ein besonderer Vorteil der Erfindung besteht darin, dass das erfindungsgemäße Verfahren eine Trennung von Synchronisationsinformationen, wie beispielsweise den Zeitinformationen, und den eigentlichen Nutzdaten, wie beispielsweise Audio-, Video- oder Multimediadaten, erlaubt. Dies ist insbesondere sinnvoll, wenn Audiodaten aus verschiedenen Quellen (z.B. Internet Streaming Services, Internet Radio, lokale Musiksammlung, Liveinput) gleichzeitig oder im Wechsel abgespielt werden.

Im Ergebnis justiert das erfindungsgemäße Verfahren keine Clock, sondern unabhängig davon einen Audiodatenstrom. Es wird vielmehr auf den Ausgabeeinheiten die Zeit des Wallclock Servers ermittelt und der Ausgabezeitpunkt und die Ausgabegeschwindigkeit auf Basis der ermittelten Zeit des Wallclock Servers gesteuert. Auf den Ausgabeeinheiten wird sozusagen für die Ausgabe der Datenströme eine virtuelle Uhr genutzt, die die Zeit des Wallclock Servers angibt. Die Datenströme werden daher in Abhängigkeit der ermittelten Zeit des Wallclock Servers, die in den Ausgabeeinheiten ermittelt wird, ausgegeben, wobei die lokalen Uhren der Ausgabeeinheiten in ihrem Ablauf nicht beeinflusst, insbesondere nicht synchronisiert, werden, sondern unabhängig von der Uhr des Wallclock Servers, d.h. unabhängig von der gemeinsamen ersten Zeitinformation, laufen. Das hat insbesondere den Vorteil, dass durch die Erfindung Probleme beim Nachstellen von Uhren auf den Ausgabeeinheiten vermieden werden.

Die Erfindung erlaubt insbesondere eine Synchronisation vieler Geräte, deren Signallaufzeiten sich unterscheiden.

Nachfolgend wird die Erfindung unter Bezugnahme auf die Figuren der Zeichnungen anhand verschiedener Ausführungsbeispiel näher erläutert werden. Es zeigen:

Figur 1:     eine Veranschaulichung der Synchronisation der Ausgabe in einem UpnP-kompatiblen (UPnP = Universal Plug and Play) LAN,

Figur 2:     eine Veranschaulichung der Synchronisation von verschiedenen lokalen und internetbasierten Audiodatenströmen über TCP, und

Figur 3:     eine Veranschaulichung der Synchronisation von verschiedenen Lautsprechern.

Obwohl nachfolgend die Erfindung an speziellen Netzwerken und Protokollen beschrieben wird, ist die Erfindung nicht auf diese speziellen Beispiele eingeschränkt, sondern umfasst vielmehr jegliche Art von Netzwerken, Protokollen oder Datenformaten, solange nur die Merkmale der unabhängigen Ansprüche realisiert werden.

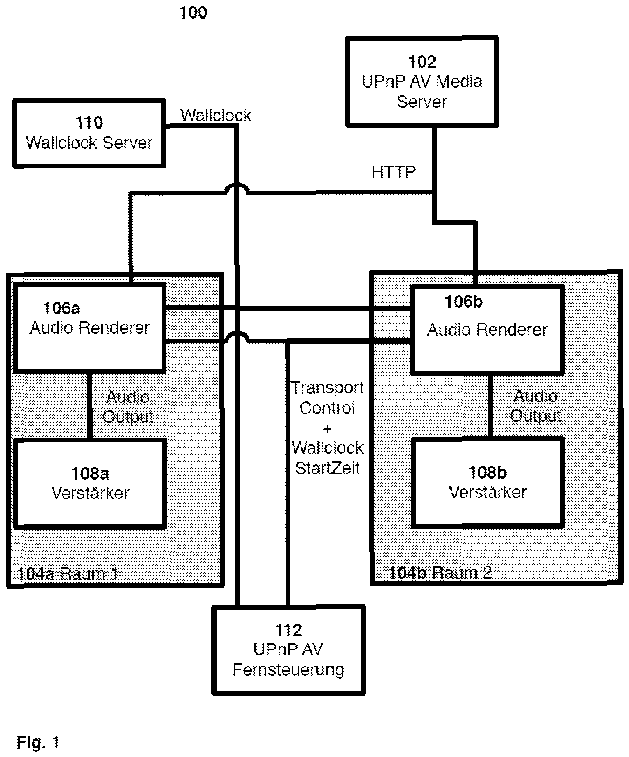

In Figur 1 ist ein UPnP-kompatibles LAN 100 dargestellt. Es umfasst in dieser beispielhaften Ausführungsform einen UPnP-AV-kompatiblen Media-Server 102, auf dem beispielsweise Audiodaten per TCP/http abgespielt und an zwei als Ausgabeeinheiten dienende Lautsprecher 104a, 104b übertragen werden, die beispielsweise in verschiedenen Räumen aufgestellt sein können. Die Übertragung erfolgt beispielsweise mit dem http-Protokoll. Die Lautsprecher 104a, 104b umfassen in dieser beispielhaften Ausführungsform jeweils einen UPnP-AV Audio Renderer 106a, 106b und jeweils einen Verstärker 108a, 108b.

Des Weiteren umfasst das UPnP-kompatibles LAN 100 einen Wallclock Server 110, welcher die gemeinsame erste, globale Zeitinformation bereitstellt, welche zumindest einem Teil der übrigen Komponenten des UpnP-kompatiblen LAN 100 zur Verfügung gestellt wird, insbesondere den UPnP-AV Audio Renderern 106a, 106b und einer UPnP-AV-kompatiblen Fernsteuerung 112. Vorzugsweise wird eine absolute globale Zeitinformation bereitgestellt. Das hat den Vorteil, dass Zeitpunkte von Ereignissen, wie z.B. für den Start einer Ausgabe, ein einziger Zeitwert angegeben werden kann, durch den z.B. der Startzeitpunkt direkt definiert wird. Alternativ sind allerdings auch Lösungen denkbar, die relative Zeitangaben verwenden, bei denen beispielsweise ein beliebiger (absoluter Zeitpunkt) als Referenzwert genutzt wird, auf den sich weitere relative Zeitangaben beziehen. Als Referenzwert kann beispielsweise ein beliebiger absoluter globaler Zeitwert des Wallclock Server 110 vorgegeben werden, dem bei der Synchronisation jeweils ein lokaler absoluter Zeitwert der lokalen Hardwarezeitgeber als lokaler Referenzzeitwert zugeordnet wird. Die relativen globalen Zeitangaben beziehen sich dann immer auf diese globalen Referenzzeitwerte. In einem solchen Ausführungsbeispiel muss aus den relativen globalen Zeitangaben wieder auf die lokalen absoluten Zeitwerte zurückgerechnet werden.

Bei der Zeitinformation kann es sich beispielsweise um die Startzeit $tw_{Start}$ für die Ausgabe von Audiodaten handeln. Zum Start der Ausgabe wird in diesem Falle mit der UPnP-AV-kompatiblen Fernsteuerung 112 ein UPnP-AV-Transportbefehl und eine Wallclock-Startzeit $tw_{Stream}$ an die UPnP-AV Audio Renderer 106a, 106b übertragen. In einer bevorzugten Ausführungsform ist vorgesehen, dass der UPnP-AV-Transportbefehl zusammen mit der Wallclock-Startzeit $tw_{Stream}$ übertragen werden.

Die UPnP-AV Audio Renderer 106a, 106b wurden mit dem erfindungsgemäßen Verfahren synchronisiert und kennen daher die Abweichung $QF_a$ und $QF_b$ ihres lokalen Hardwarezeitgebers von der Wallclock des Wallclock Servers 110 sowie jeweils den lokalen Zeitpunkt $tc_{Stan,a/b}$, welcher der Wallclock-Startzeit $tw_{Start}$ entspricht.

Die UPnP-AV Audio Renderer 106a und 106b starten die Audiohardware zu den der Wallclock-Startzeit $tw_{Start}$ entsprechenden Zeitpunkten $tc_{Start,a}$ und $tC_{Start,b}$. In der Regel werden zum Zeitpunkt $tw_{Start}$ keine Audiodaten ausgegeben sondern 0 Werte abgespielt und die Datenströme entsprechend der Erfindung synchronisiert. Wenn nun eine Netzwerkkomponente (z.B. die Fernsteuerung) eine Nutzereingabe zur Wiedergabe eines Audiodatenstromes übermittelt, wird ein UPnP Transportkommando, die Quelladresse (URI), sowie ein in der Zukunft liegender Startzeitpunkt $tw_{stream}$ entsprechend der Wallclock Zeitdomäne übermittelt. Die Datenströme werden entsprechend des in der URI definierten Protokolls (z.B.: http, mms, rstp) von der Quelladresse gelesen, bei Bedarf decodiert und in einem lokalen Speicherbereich gehalten (Vorladen). In der Regel wird nicht der gesamte Datenstrom, sondern nur der Beginn (z.B. 4 Sekunden) vorgeladen. Der Startzeitpunkt $tw_{stream}$ kann erfindungsgemäß auf eine lokale Samplepostion umgerechnet und ab diesem Zeitpunkt in den laufenden Datenstrom eingefügt werden.

In einer beispielhaften Ausführungsform wird der Datenstrom jeweils durch einen Resamplingalgorithmus synchronisiert.

Alternativ zur Synchronisation durch Resamplingalgorithmen kann auch die Samplerate angepasst werden, indem die Frequenz des Quarzes der UPnP-AV Audio Renderer 106a und 106b an die Frequenz der Wallclock angepasst wird. Nachdem die Audiodaten des Audiostreams durch einen D/A-Wandler in analoge Signale gewandelt wurden, werden sie an die Verstärker 108a, 108b übergeben und schließlich durch die Lautsprecher 104a, 104b ausgegeben.

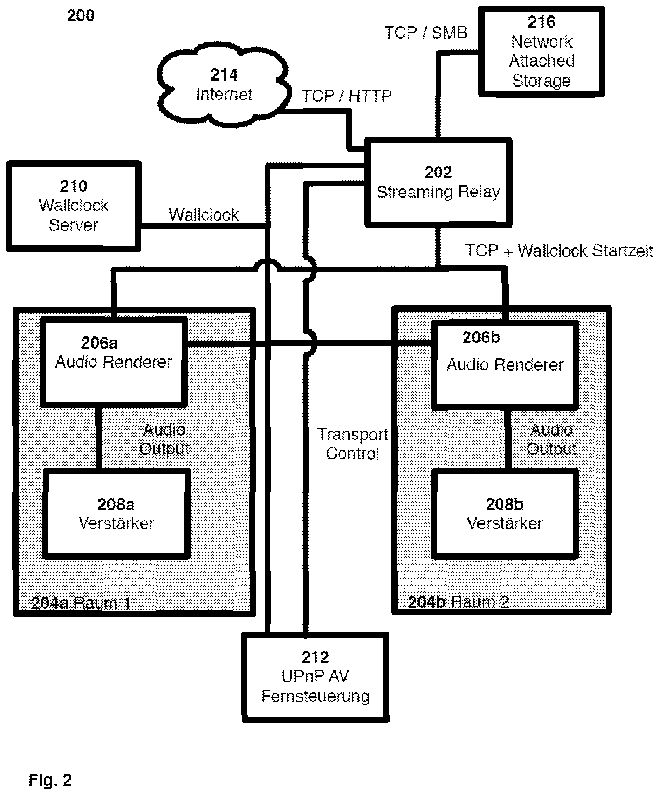

Anhand von Figur 2 soll durch ein zweites Ausführungsbeispiel die Synchronisation von verschiedenen lokalen und internetbasierten Audiodatenströmen über TCP erläutert werden. Das UPnP-kompatible LAN 200 des zweiten Ausführungsbeispiels umfasst neben den Komponenten Wallclock Server 210, UPnP-AV-kompatiblen Fernsteuerung 212 und Lautsprecher 204a, 204b mit UPnP-AV Audio Renderer 206a, 206b und Verstärker 208a, 208b zusätzlich ein sogenanntes Streaming Relay 202. Bei dem Streaming Relay 202 handelt es sich um ein zentrales Software-Modul, über das alle in das LAN 200 eingehenden Datenströme umgeleitet werden. Das Streaming Relay 202 kann prinzipiell auf einer eigenen im UPnP-kompatible LAN 200 vorhandenen Hardwarekomponente oder in einer der vorhandenen Hardwarekomponente (z.B. einem Media Server) des UPnP-kompatible LAN 200 installiert sein. Diese Datenströme, wie z.B. Audio-, Video- oder Multimediadatenströme, können von einer Quelle im Internet 214 oder einem Network Attached Storage 216 bereitgestellt werden. Für die Übertragung aus dem Internet 214 an das Streaming Relay 202 kann beispielsweise das TCP/http-Protokoll genutzt werden, während für die Übertragung von dem Network Attached Storage 216 an das Streaming Relay 202 beispielsweise das TCP/SMB-Protokoll (SMB = Server Massage Block) zum Einsatz kommen kann.

Das Streaming Relay 202 stellt sicher, dass bei kontinuierlichen Datenströmen alle Audioadapter, wie zum Beispiel die Lautsprecher 204a, 204b, mit dem gleichen Datenpaket beginnen. Das Streaming Relay 202 ist auch in der Lage je nach Audiodatenformat gültige Samplepostionen am Start eines Frames zu bestimmen. Das Streaming Relay 202 übernimmt die Aufgabe der Fernsteuerung aus Figur 1; es übermittelt den Audioadaptern eine Startposition ($tw_{stream}$), ein UPnP Transportkommando, sowie ein vom Streaming Relay bereitgestellte Quelladresse (URI). Das Streaming Relay kann seinerseits mittels eines UPnP Transportkommandos (z.B. von der Fernsteuerung 112), welches die Nutzereingabe entgegen nimmt, ferngesteuert werden.

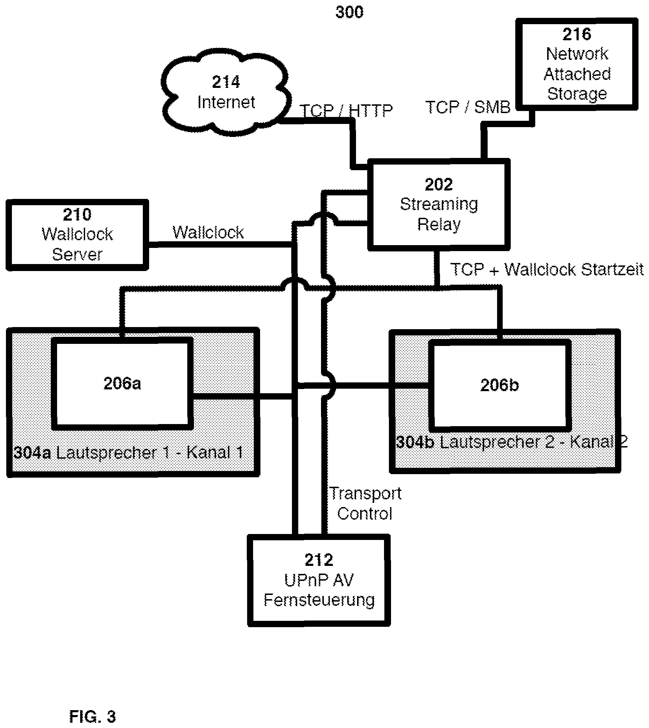

Anstelle von verschieden Lautsprechern 204a, 204b in verschiedenen Räumen kann es sich auch um unterschiedliche Kanäle eines Audiodatenstroms handeln, die durch einzelne Aktivlautsprecher 304a und 304b ausgegeben werden. Diese Situation ist in Figur 3 wiedergegeben.

Die Erfindung schränkt sich in ihrer Ausführungsform nicht auf die vorstehend angegebenen bevorzugten Ausführungsbeispiele. Vielmehr ist eine Anzahl von Varianten denkbar, die von dem erfindungsgemäßen Verfahren und der erfindungsgemäßen Anordnung sowie dem erfindungsgemäßen Computerprogramm und dem erfindungsgemäßen computerlesbaren Speichermedium auch bei grundsätzlich anders gearteten Ausführungen Gebrauch machen.

Bezugszeichenliste

| | |
|---|---|
| 100 | UpnP-kompatibles LAN |
| 102 | UPnP-AV-kompatiblen Media-Server |
| 104a | Lautsprecher |
| 104b | Lautsprecher |
| 106a | UPnP-AV Audio Renderer |
| 106b | UPnP-AV Audio Renderer |
| 108a | Verstärker |
| 108b | Verstärker |
| 110 | Wallclock Server |
| 112 | UPnP-AV-kompatiblen Fernsteuerung |
| 200 | UpnP-kompatibles LAN |
| 202 | Streaming Relay |
| 204a | Lautsprecher |
| 204b | Lautsprecher |
| 206a | UPnP-AV Audio Renderer |
| 206b | UPnP-AV Audio Renderer |
| 208a | Verstärker |

| 208b | Verstärker |
| 210 | Wallclock Server |
| 212 | UPnP-AV-kompatiblen Fernsteuerung |
| 214 | Internet |
| 216 | Network Attached Storage |
| 304a | Aktivlautsprecher |
| 304b | Aktivlautsprecher |

**Patentansprüche**

**1.** Verfahren zum Synchronisieren der Datenausgabe in Netzwerken, wobei mindestens ein Datenstrom von einer Netzwerkeinheit (102, 202) zu mindestens zwei Ausgabeeinheiten (104a, b, 204a, b, 304a, b) des Netzwerks übertragen und durch zumindest einen Teil der Ausgabeeinheiten (104a, b, 204a, b, 304a, b) ausgegeben wird,

**dadurch gekennzeichnet, dass**

zumindest den mindestens zwei Ausgabeeinheiten (104a, b, 204a, b, 304a, b) periodisch eine globale Zeitinformation (tw) zur Verfügung gestellt wird und auf den mindestens zwei Ausgabeeinheiten (104a, b, 204a, b, 304a, b) die globale Zeit approximiert wird durch Auswertung

- der globalen Zeitinformation (tw) und jeweils einer lokalen, durch jeweils einen von den mindestens zwei Ausgabeeinheiten (104a, b, 204a, b, 304a, b) verwendeten Hardwarezeitgeber bereitgestellten Zeitinformation (tc), wobei die lokale Zeitinformation (tc) den Zeitpunkt des Empfangs der globalen Zeitinformation (tw) auf jeweils den mindestens zwei Ausgabeeinheiten (104a, b, 204a, b, 304a, b) angibt,
- der Länge der Zeittakte des globalen und der lokalen Zeitgeber und
- der Dauer der Übertragung der globalen Zeitinformation (tw) von einer die globale Zeitinformation (tw) zur Verfügung stellenden Einheit (110, 210) zu den mindestens zwei Ausgabeeinheiten (104a, b, 204a, b, 304a, b), wobei die Dauer der Übertragung unter Berücksichtigung einer Varianz der Laufzeit zwischen der die globale Zeitinformation zur Verfügung stellenden Einheit (110, 210) und den mindestens zwei Ausgabeeinheiten (104a, b, 204a, b, 304a, b) ermittelt wird, und

die Ausgabe der Daten des Datenstroms zumindest hinsichtlich Phase und Frequenz auf Basis der approximierten globalen Zeit ausgeglichen wird.

**2.** Verfahren nach Anspruch 1,
**dadurch gekennzeichnet, dass**
die Ausgabe der Daten des Datenstroms synchronisiert wird, wobei lokalen Uhren der Ausgabeeinheiten (104a, b, 204a, b, 304a, b) unabhängig von der gemeinsamen ersten Zeitinformation laufen.

**3.** Verfahren nach Anspruch 1 oder 2,
**dadurch gekennzeichnet, dass**
die Bereitstellung der globalen Zeitinformation (tw) erfolgt, indem die globale Zeitinformation (tw) umfassende Daten über die Vermittlungs-, Transport-, Sitzungs-, Darstellungs-, Anwendungsschicht des OSI-Schichtenmodells oder eine Kombination dieser Schichten übertragen werden.

**4.** Verfahren nach einem der voranstehenden Ansprüche,
**dadurch gekennzeichnet, dass**
es sich bei der globalen Zeitinformation (tw) um eine absolute globale Zeitinformation oder um eine relative Zeitangabe, die sich auf einen vorgebbaren globalen Bezugs- oder Startpunkt bezieht, handelt.

**5.** Verfahren nach einem der voranstehenden Ansprüche,
**dadurch gekennzeichnet, dass**
die Ausgabe der Daten synchronisiert wird, indem eine Differenz zwischen der globalen (tw) und der mindestens einen lokalen Zeitinformation (tc) kompensiert wird.

**6.** Verfahren nach einem der voranstehenden Ansprüche,
**dadurch gekennzeichnet, dass**
der Start der Ausgabe der Daten synchronisiert wird.

7. Verfahren nach einem der voranstehenden Ansprüche,
**dadurch gekennzeichnet, dass**
die Ausgabegeschwindigkeit der Daten synchronisiert wird.

8. Verfahren nach einem der voranstehenden Ansprüche,
**dadurch gekennzeichnet, dass**
die Dauer der Datenübertragung ermittelt wird, indem von mindestens einer der Ausgabeeinheiten (104a, b, 204a, b, 304a, b) Daten zu der die globale Zeitinformation (tw) zur Verfügung stellenden Einheit (110, 210) und von dieser zurück an die mindestens eine Ausgabeeinheit (104a, b, 204a, b, 304a, b) gesendet werden und die Zeit zwischen Senden und Empfang der Daten in der mindestens einen Ausgabeeinheit (104a, b, 204a, b, 304a, b) bestimmt wird.

9. Verfahren nach einem der voranstehenden Ansprüche,
**dadurch gekennzeichnet, dass**
die Synchronisation eine Ermittlung der Anzahl von Samples, die der Differenz zwischen der globalen (tw) und der mindestens einen lokalen Zeitinformation (tc) entspricht, umfasst.

10. Verfahren nach einem der voranstehenden Ansprüche,
**dadurch gekennzeichnet, dass**
die Synchronisation eine Anpassung der Taktfrequenz mindestens eines der in den mindestens zwei Ausgabeeinheiten (104a, b, 204a, b, 304a, b) verwendeten Hardwarezeitgeber und/oder ein Resampling zumindest eines Teils der Datenströme umfasst.

11. Anordnung umfassend mindestens eine Netzwerkeinheit (102, 202) und mindestens zwei Ausgabeeinheiten (104a, b, 204a, b, 304a, b), wobei die Anordnung derart eingerichtet ist, dass ein Verfahren zum Synchronisieren von Datenströmen in Netzwerken gemäß einem der Ansprüche 1 bis 10 ausführbar ist.

12. Anordnung nach Anspruch 11,
**dadurch gekennzeichnet, dass**
die Anordnung Teil eines Mehrraum-Audiosystems ist.

13. Anordnung nach Anspruch 11 oder 12,
**dadurch gekennzeichnet, dass**
die Datenübertragung zwischen der mindestens einen Netzwerkeinheit (102, 202) und den mindestens zwei Ausgabeeinheiten (104a, b, 204a, b, 304a, b) zumindest teilweise drahtlos erfolgt.

14. Anordnung nach einem der Ansprüche 11 bis 13,
**dadurch gekennzeichnet, dass**
die Ausgabeeinheiten (104a, b, 204a, b, 304a, b) Audio-, Video- und/oder Multimedia Abspielgeräte umfassen.

15. Anordnung nach einem der Ansprüche 11 bis 14,
**dadurch gekennzeichnet, dass**
die Anordnung ein Netzwerk mit zumindest teilweise drahtlosen Kommunikationsverbindungen umfasst.

16. Computerprogramm, das es einer Datenverarbeitungseinrichtung ermöglicht, nachdem es in Speichermittel der Datenverarbeitungseinrichtung geladen worden ist, ein Verfahren zum Synchronisieren von Datenströmen in Netzwerken gemäß einem der Ansprüche 1 bis 10 durchzuführen.

17. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Synchronisieren von Datenströmen in Netzwerken gemäß einem der Ansprüche 1 bis 10 durchzuführen.

18. Verfahren, bei dem ein Computerprogramm nach Anspruch 16 aus einem elektronischen Datennetz, wie beispielsweise aus dem Internet, auf eine an das Datennetz angeschlossene Datenverarbeitungseinrichtung heruntergeladen wird.

**EP 2 467 993 B1**

**Claims**

1.  A method for synchronizing the data output in networks, wherein at least one data stream is transmitted by a network unit (102, 202) to at least two output units (104a, b, 204a, b, 304a, b) of the network and is output by at least part of the output units (104a, b, 204a, b, 304a, b),
    **characterized in that**
    information about the global time (tw) is provided periodically at least to the at least two output units (104a, b, 204a, b, 304a, b) and the global time is approximated on the at least two output units (104a, b, 204a, b, 304a, b) by evaluating

    - the information about the global time (tw) and respectively information about the local time (tc) provided by hardware clocks used by each of the at least two output units (104a, b, 204a, b, 304a, b), wherein the information about the local time (tc) indicates the instant of time that the information about the global time (tw) was received at each of the at least two output units (104a, b, 204a, b, 304a, b),
    - the length of the time cycles of the global and the local clocks, and
    - the duration of transmission of the information about the global time (tw) from a unit (110, 210) providing the information about the global time (tw) to the at least two output units (104a, b, 204a, b, 304a, b), wherein the duration of the transmission is determined by taking into account a variance in the transfer time between the unit (110, 210) providing the information about the global time and the at least two output units (104a, b, 204a, b, 304a, b), and the output of the data of the data stream is equalized at least with regard to phase and frequency, on the basis of the approximated global time.

2.  The method according to Claim 1, **characterized in that**
    the output of the data of the data stream is synchronized, wherein local clocks of the output units (104a, b, 204a, b, 304a, b) function independently of the joint first information about the time.

3.  The method according to Claim 1 or 2, **characterized in that**
    the information about the global time (tw) is provided by transmitting data comprising information about the global time (tw) via the network layer, transport layer, session layer, presentation layer or application layer of the OSI layer model or a combination of said layers.

4.  The method according to any one of the preceding claims, **characterized in that**
    the information about the global time (tw) is absolute global time information or a relative time indication which refers to a predefinable global reference or starting point.

5.  The method according to any one of the preceding claims, **characterized in that**
    the output of the data is synchronized by compensating for a difference between the information about the global time (tw) and the at least one piece of information about the local time (tc).

6.  The method according to any one of the preceding claims, **characterized in that** the start of the output of the data is synchronized.

7.  The method according to any one of the preceding claims, **characterized in that** the output rate of the data is synchronized.

8.  The method according to any one of the preceding claims,
    **characterized in that**
    the duration of the data transmission is determined by transmitting data from at least one of the output units (104a, b, 204a, b, 304a, b) to the unit (110, 210) providing the information about the global time (tw) and returning said data to the at least one output unit (104a, b, 204a, b, 304a, b) and determining the time between transmission and reception of the data in the at least one output unit (104a, b, 204a, b, 304a, b).

9.  The method according to any one of the preceding claims,
    **characterized in that**
    the synchronization comprises a determination of the number of samples corresponding to the difference between the information about the global time (tw) and the at least one piece of information about the local time (tc).

10. The method according to any one of the preceding claims, **characterized in that**
    the synchronization comprises an adaptation of the clock frequency of at least one of the hardware clocks used in the at least two output units (104a, b, 204a, b, 304a, b) and/or a resampling of at least part of the data streams.

11. An arrangement, comprising at least one network unit (102, 202) and at least two output units (104a, b, 204a, b, 304a, b), wherein the arrangement is configured in such a manner that a method for synchronizing data streams in networks according to any one of Claims 1 to 10 can be carried out.

12. The arrangement according to Claim 11, **characterized in that** the arrangement is part of a multi-room audio system.

13. The arrangement according to Claim 11 or 12, **characterized in that** the data transmission between the at least one network unit (102, 202) and the at least two output units (104a, b, 204a, b, 304a, b) is at least partly wireless.

14. The arrangement according to any one of Claims 11 to 13, **characterized in that** the output units (104a, b, 204a, b, 304a, b) comprise audio, video and/or multimedia playback devices.

15. The arrangement according to any one of Claims 11 to 14, **characterized in that** the arrangement comprises a network having at least partly wireless communication links.

16. A computer program which enables a data processing device to carry out a method for synchronizing data streams in networks according to any one of Claims 1 to 10, once said computer program has been loaded into storage means of the data processing device.

17. A computer-readable storage medium, on which a program is stored, which enables a data processing device to carry out a method for synchronizing data streams in networks according to any one of Claims 1 to 10, once said computer program has been loaded into storage means of the data processing device.

18. A method, in which a computer program according to Claim 16 is downloaded from an electronic data network, such as for example from the internet, onto a data processing device which is connected to the data network.

**Revendications**

1. Procédé pour synchroniser la sortie de données sur des réseaux, au moins un flux de données étant transmis d'une unité de réseau (102, 202) à au moins deux unités de sortie (104a, b, 204a, b, 304a, b) du réseau et émis par au moins une partie des unités de sortie (104a, b, 204a, b, 304a, b), **caractérisé en ce qu'** une information temporelle globale (tw) est périodiquement mise à disposition au moins des au moins deux unités de sortie (104a, b, 204a, b, 304a, b) et **en ce que**, sur les au moins deux unités de sortie (104a, b, 204a, b, 304a, b), le temps global est approché par évaluation

    - de l'information temporelle globale (tw) et respectivement d'une information temporelle locale (tc) mise à disposition par respectivement une horloge informatique utilisée par les au moins deux unités de sortie (104, b, 204a, b, 304a, b), l'information temporelle locale (tc) indiquant l'instant de la réception de l'information temporelle globale (tw) sur respectivement les au moins deux unités de sortie (104a, b, 204a, b, 304a, b),
    - la longueur du signal d'horloge de l'horloge globale et de l'horloge locale et
    - la durée de la transmission de l'information temporelle globale (tw) d'une unité (110, 210) mettant à disposition l'information temporelle globale (tw) aux au moins deux unités de sortie (104a, b, 204a, b, 304a, b), la durée de la transmission étant déterminée en prenant en compte la variance du temps de marche entre l'unité (110, 210) mettant à disposition l'information temporelle globale et les au moins deux unités de sortie (104a, b, 204a, b, 304a, b), et la sortie des données du flux de données étant comparée sur la base d'un temps global approché au moins relativement à la phase et à la fréquence.

2. Procédé selon la revendication 1, **caractérisé en ce que** la sortie des données du flux de données est synchronisée, les horloges locales des unités de sortie (104a, b, 204a, b, 304a, b) fonctionnant indépendamment de la première information temporelle commune.

3. Procédé selon la revendication 1 ou 2,
   **caractérisé en ce que**
   la mise à disposition de l'information temporelle globale (tw) est effectuée par la transmission des données comprenant l'information temporelle globale (tw) par la couche de réseau, de transport, de session, de représentation, d'application du modèle OSI ou par une combinaison de ces couches.

4. Procédé selon l'une des revendications précédentes,
   **caractérisé en ce que**
   l'information temporelle globale (tw) est une information temporelle globale absolue ou une indication temporelle relative, se rapportant à un point de référence ou de départ global spécifiable.

5. Procédé selon l'une des revendications précédentes,
   **caractérisé en ce que**
   la sortie des données est synchronisée par la compensation d'une différence entre l'information temporelle globale (tw) et l'au moins une information temporelle locale (tc).

6. Procédé selon l'une des revendications précédentes,
   **caractérisé en ce que**
   le démarrage de la sortie des données est synchronisé.

7. Procédé selon l'une des revendications précédentes,
   **caractérisé en ce que**
   la vitesse de sortie des données est synchronisée.

8. Procédé selon l'une des revendications précédentes,
   **caractérisé en ce que**
   la durée de la transmission des données est déterminée en envoyant des données de l'au moins une des unités de sortie (104a, b, 204a, b, 304a, b) à l'unité (110, 210) mettant à disposition l'information temporelle globale (tw), et, de celle-ci, en retour à l'au moins une unité de sortie (104a, b, 204a, b, 304a, b), et **en ce que** le temps entre l'émission et la réception des données est déterminé dans l'au moins une unité de sortie (104a, b, 204a, b, 304a, b).

9. Procédé selon l'une des revendications précédentes,
   **caractérisé en ce que**
   la synchronisation comprend une détermination du nombre d'échantillons, lesquels correspondent à la différence entre l'information temporelle globale (tw) et l'au moins une information temporelle locale (tc).

10. Procédé selon l'une des revendications précédentes,
    **caractérisé en ce que**
    la synchronisation comprend un ajustement de la fréquence d'horloge de l'au moins une horloge informatique utilisée dans les au moins deux unités de sortie (104a, b, 204a, b, 304a, b) et/ou un rééchantillonnage d'au moins une partie des flux de données.

11. Agencement comprenant au moins une unité de réseau (102, 202) et au moins deux unités de sortie (104a, b, 204a, b, 304a, b), l'agencement étant mis en place de telle sorte qu'un procédé pour synchroniser des flux de données sur des réseaux est exécutable conformément à l'une des revendications 1 à 10.

12. Agencement selon la revendication 11,
    **caractérisé en ce que**
    l'agencement est une partie d'un système audio multi-pièces.

13. Agencement selon la revendication 11 ou 12,
    **caractérisé en ce que**
    la transmission des données entre l'au moins une unité de réseau (102, 202) et les au moins deux unités de sortie (104a, b, 204a, b, 304a, b) est effectuée au moins partiellement sans fil.

14. Agencement selon l'une des revendications 11 à 13,
    **caractérisé en ce que**
    les unités de sortie (104a, b, 204a, b, 304a, b) comprennent des lecteurs audio, vidéo et/ou multimédia.

**15.** Agencement selon l'une des revendications 11 à 14,
**caractérisé en ce que**
l'agencement comprend un réseau avec des connexions de communication au moins partiellement sans fil.

**16.** Programme informatique permettant à une installation de traitement des données d'exécuter un procédé pour synchroniser des flux de données sur des réseaux selon l'une des revendications 1 à 10, après qu'il a été chargé dans des moyens de stockage de l'installation de traitement des données.

**17.** Support de stockage pouvant être lu par ordinateur, sur lequel un programme est stocké, lequel permet à une installation de traitement des données d'exécuter un procédé pour synchroniser des flux de données sur des réseaux selon l'une des revendications 1 à 10, après qu'il a été chargé dans des moyens de stockage de l'installation de traitement des données.

**18.** Procédé par lequel un programme informatique selon la revendication 16 est téléchargé, à partir d'un réseau de données électronique, comme Internet, par exemple, sur une installation de traitement des données connectée au réseau de données.

**100**

Fig. 1

200

214
Internet

TCP / SMB

216
Network
Attached
Storage

TCP / HTTP

202
Streaming Relay

210
Wallclock
Server

Wallclock

TCP + Wallclock Startzeit

206a
Audio Renderer

Audio
Output

Transport
Control

206b
Audio Renderer

Audio
Output

208a
Verstärker

208b
Verstärker

204a Raum 1

204b Raum 2

212
UPnP AV
Fernsteuerung

Fig. 2

**300**

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080112440 A1
- EP 1398931 A1
- US 5220676 A

**In der Beschreibung aufgeführte Nicht-Patentliteratur**

- **KANG JEONG-SEOK et al.** RBCC: Reservation-Based Concurrency Control for Distributed UPnP Devices. *International Conference on Control, Automation and Systems (ICCAS) 2008,* 14. Oktober 2008, 880-883